(19) Europäisches Patentamt
European Patent Office
Office européen des brevets

(11) **EP 4 715 933 A1**

(12) **EUROPEAN PATENT APPLICATION**
published in accordance with Art. 153(4) EPC

(43) Date of publication:
**25.03.2026 Bulletin 2026/13**

(21) Application number: **23938806.9**

(22) Date of filing: **30.05.2023**

(51) International Patent Classification (IPC):
***H01M 10/0567*** *(2010.01)*

(52) Cooperative Patent Classification (CPC):
Y02E 60/10

(86) International application number:
**PCT/CN2023/097179**

(87) International publication number:
**WO 2024/243811 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **WU, Zeli**
  **Ningde, Fujian 352100 (CN)**
- **GUO, Jie**
  **Ningde, Fujian 352100 (CN)**
- **HAN, Changlong**
  **Ningde, Fujian 352100 (CN)**
- **LIU, Wenhao**
  **Ningde, Fujian 352100 (CN)**
- **WU, Qiao**
  **Ningde, Fujian 352100 (CN)**
- **HUANG, Lei**
  **Ningde, Fujian 352100 (CN)**
- **WANG, Fulin**
  **Ningde, Fujian 352100 (CN)**

(74) Representative: **Gong, Jinping**
**CocreateIP**
**Neumarkter Straße 21**
**81673 München (DE)**

(54) **ELECTROLYTE, BATTERY CELL AND PREPARATION METHOD THEREFOR, BATTERY, AND ELECTRICAL APPARATUS**

(57) The present application provides an electrolyte solution, a battery cell and a preparation method therefor, a battery, and an electrical apparatus. The electrolyte solution includes a non-aqueous solvent and an electrolyte salt, where the non-aqueous solvent includes ethylene carbonate (EC), and a weight content of the EC in the non-aqueous solvent is denoted by x, based on a total weight of the non-aqueous solvent; the electrolyte salt includes a first electrolyte salt represented by formula (1) and a second electrolyte salt represented by formula (2), and a weight content of the first electrolyte salt in the electrolyte solution is denoted by y, and a weight content of the second electrolyte salt is denoted by z, based on a total weight of the electrolyte solution; $R_1$ and $R_2$ each independently include a fluorine atom or a C1-C6 fluoroalkyl group, $R_3$ includes a fluorine atom or a C1-C6 fluoroalkyl group, and $M_1$ and $M_2$ each independently include one or more of Li, Na, and K; where $5\% \le x \le 25\%$, $0.75 \le x/y \le 5$, and $120 \le x/z \le 3000$.

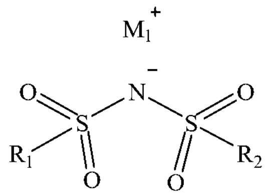

Formula (1)

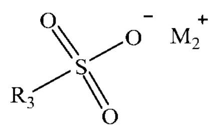

Formula (2)

EP 4 715 933 A1

5

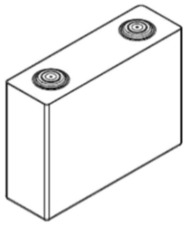

FIG. 1

## Description

### TECHNICAL FIELD

The present application relates to an electrolyte solution, a battery cell and a preparation method therefor, a battery, and an electrical apparatus.

### BACKGROUND

In recent years, batteries have been widely used in energy storage power systems such as hydropower, thermal power, wind power and solar power stations, as well as the fields of electric tools, electric bicycles, electric motorcycles, electric vehicles, military equipment, aerospace and other fields. An electrolyte solution is an important component of the battery, and therefore the composition of the electrolyte solution will affect the performance of the battery. The above statements are intended solely to offer background information relevant to the present application and do not necessarily constitute the prior art.

### SUMMARY OF THE INVENTION

The present application provides an electrolyte solution, a battery cell and a preparation method therefor, a battery, and an electrical apparatus, so that the high-temperature cycling performance of the battery can be improved.

In a first aspect, the present application provides an electrolyte solution, including a non-aqueous solvent and an electrolyte salt, where the non-aqueous solvent includes ethylene carbonate (EC), and a weight content of the EC in the non-aqueous solvent is denoted by x, based on a total weight of the non-aqueous solvent; the electrolyte salt includes a first electrolyte salt represented by formula (1) and a second electrolyte salt represented by formula (2), and a weight content of the first electrolyte salt in the electrolyte solution is denoted by y, and a weight content of the second electrolyte salt is denoted by z, based on a total weight of the electrolyte solution; $R_1$ and $R_2$ each independently include a fluorine atom or a C1-C6 fluoroalkyl group, $R_3$ includes a fluorine atom or a C1-C6 fluoroalkyl group, and $M_1$ and $M_2$ each independently include one or more of Li, Na, and K; where $5\% \leq x \leq 25\%$, $0.75 \leq x/y \leq 5$, and $120 \leq x/z \leq 3000$.

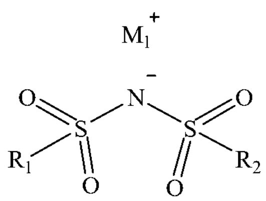

Formula (1)

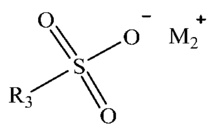

Formula (2)

The inventors have found through research that by using a low content of the EC (accounting for 5%-25% of the total weight of the non-aqueous solvent) in combination with the first electrolyte salt represented by formula (1) and the second electrolyte salt represented by formula (2), and by reasonably adjusting the content relationship between the three, the battery may have a good high-temperature cycling performance.

In any embodiment, $8\% \leq x \leq 20\%$, optionally, $10\% \leq x \leq 18\%$. By adjusting the weight content x of the EC in the non-aqueous solvent within the above range, the high-temperature cycling performance of the battery may be further improved.

In any embodiment, $0.86 \leq x/y \leq 3$, optionally, $1 \leq x/y \leq 2$. Thereby, the synergistic effect between the EC and the first electrolyte salt may be better exerted, and the high-temperature cycling performance of the battery may be further improved.

In any embodiment, $160 \leq x/z \leq 1500$, optionally, $300 \leq x/z \leq 1200$. Thereby, the synergistic effect between the EC and the second electrolyte salt may be better exerted, and the high-temperature cycling performance of the battery may be further improved.

In any embodiment, $2.4\% \leq y \leq 18\%$, optionally, $6\% \leq y \leq 12\%$. By adjusting the weight content y of the first electrolyte

salt in the electrolyte solution within the above range, the high-temperature cycling performance of the battery may be further improved.

In any embodiment, $0.004\% \leq z \leq 0.10\%$, optionally, $0.008\% \leq z \leq 0.075\%$. By adjusting the weight content z of the second electrolyte salt in the electrolyte solution within the above range, the high-temperature cycling performance of the battery may be further improved.

In any embodiment, $10\% \leq x \leq 18\%$, $1 \leq x/y \leq 2$, $300 \leq x/z \leq 1200$, $6\% \leq y \leq 12\%$, and $0.008\% \leq z \leq 0.075\%$. Thereby, the synergistic effect among the EC, the first electrolyte salt, and the second electrolyte salt may be better exerted, and the high-temperature cycling performance of the battery may be further improved.

In any embodiment, $R_1$ and $R_2$ each independently include a fluorine atom, a trifluoromethyl group, a pentafluoroethyl group, a heptafluoropropyl group, or a nonafluorobutyl group. When $R_1$ and $R_2$ are within the above range, it is also helpful to form a thinner interfacial film, thereby further helping to reduce the interfacial ion impedance and improve the kinetic performance of the battery.

In any embodiment, $R_3$ includes a fluorine atom, a trifluoromethyl group, or a pentafluoroethyl group. When $R_3$ is within the above range, it is also helpful to form a thinner interfacial film, thereby helping to reduce the interfacial ion impedance and improve the kinetic performance of the battery.

In any embodiment, the first electrolyte salt includes one or more of the following:

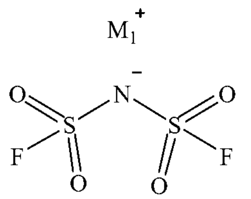
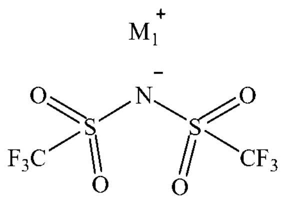
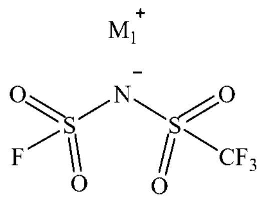
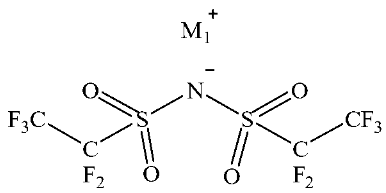
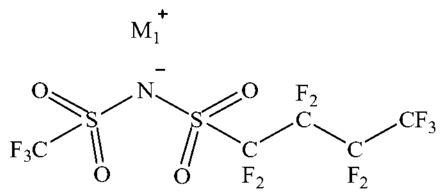
.

When being within the above range, the first electrolyte salt has higher thermal stability and is less prone to hydrolysis, which is helpful to improve the ionic conductivity of the electrolyte solution, thereby helping to further improve the high-temperature cycling performance of the battery. In addition, it is also helpful to form a thinner interfacial film, thereby further helping to reduce the interfacial ion impedance and improve the kinetic performance of the battery.

In any embodiment, the second electrolyte salt includes one or more of the following:

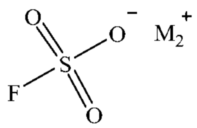
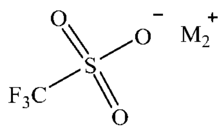
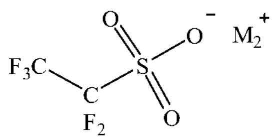
.

When being within the above range, the second electrolyte salt has higher thermal stability, and the content of inorganic components and organic components in an interfacial film may be better adjusted, which thus is helpful to obtain a thinner and more flexible interfacial film, thereby helping to further improve the high-temperature cycling performance of the battery. In addition, it is also helpful to reduce the interfacial ion impedance and improve the kinetic performance of the battery.

In any embodiment, $M_1$ includes one or both of Li and Na, and optionally includes Li.

In any embodiment, $M_2$ includes one or both of Li and Na, and optionally includes Li.

In any embodiment, the non-aqueous solvent further includes chain carbonate. The chain carbonate may adjust the viscosity of the electrolyte solution, thereby being capable of further improving the ionic conductivity of the electrolyte solution and helping to improve the high-temperature cycling performance of the battery.

In any embodiment, a weight content of the chain carbonate in the non-aqueous solvent is denoted by m, based on the total weight of the non-aqueous solvent, and then $m \geq 70\%$.

In any embodiment, the chain carbonate includes one or more of ethyl methyl carbonate (EMC), diethyl carbonate (DEC), and dimethyl carbonate (DMC).

In any embodiment, the non-aqueous solvent further includes propylene carbonate (PC).

In any embodiment, a weight content of the PC in the non-aqueous solvent is denoted by n, based on the total weight of the non-aqueous solvent, and then $0<n\leq5\%$.

In any embodiment, the electrolyte solution further includes a third electrolyte salt represented by formula (3), and $M_3$ includes one or more of Li, Na, and K.

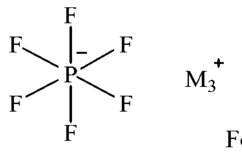

Formula (3)

The third electrolyte salt represented by formula (3) has appropriate solubility, high ionic conductivity, and a wide electrochemical window in the non-aqueous solvent, thereby being capable of improving the ionic conductivity of the electrolyte solution, further passivating a positive electrode current collector, and reducing the corrosion of the first electrolyte salt on the positive electrode current collector. Therefore, when the electrolyte solution further includes the third electrolyte salt represented by formula (3), it helps to further improve the high-temperature cycling performance of the battery.

In any embodiment, $M_3$ includes one or both of Li and Na, and optionally includes Li.

In any embodiment, a weight content of the third electrolyte salt in the electrolyte solution is denoted by p, based on the total weight of the electrolyte solution, and then $10\%\leq y+p\leq25\%$. Thus, this may make the electrolyte solution have high ionic conductivity and low viscosity, so that the high-temperature cycling performance of the battery may further be improved.

In any embodiment, the electrolyte solution further includes a fourth electrolyte salt represented by formula (4), and $M_4$ includes one or more of Li, Na, and K.

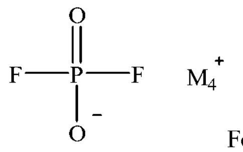

Formula (4)

The fourth electrolyte salt represented by formula (4) usually decomposes in the electrolyte solution earlier than the non-aqueous solvent, thereby being capable of generating a low-impedance interfacial film at a positive electrode. The interfacial film may protect a positive electrode active material, reduce the oxidative decomposition of the electrolyte solution on a positive electrode surface, reduce the gas production rate of the battery, improve the high-temperature storage performance of the battery, and further reduce the charge transfer resistance of the positive electrode, thereby improving the kinetic performance of the positive electrode. At the same time, the fourth electrolyte salt represented by formula (4) may also generate a low-impedance interfacial film at a negative electrode, thereby protecting a negative electrode active material and reducing the reductive decomposition of the electrolyte solution on a negative electrode surface. Therefore, when the electrolyte solution further includes the fourth electrolyte salt represented by formula (4), the high-temperature storage performance and/or kinetic performance of the battery may also be improved.

In any embodiment, $M_4$ includes one or both of Li and Na, and optionally includes Li.

In any embodiment, a weight content of the fourth electrolyte salt in the electrolyte solution is denoted by q, based on the total weight of the electrolyte solution, and then $0<q\leq0.5\%$, optionally, $0.1\%\leq q\leq0.4\%$.

In any embodiment, the electrolyte solution further includes an additive, and the additive includes one or two of 1,3-propanesultone (PS) and fluoroethylene carbonate (FEC).

The PS and the FEC may form an interfacial film at a negative electrode, and the stability of the negative electrode interfacial film is improved, so that a negative electrode active material may be better protected and side reactions between the negative electrode active material and the electrolyte solution are reduced, thereby improving the high-temperature cycling performance of the battery.

In any embodiment, a weight content of the additive in the electrolyte solution is denoted by r, based on the total weight of the electrolyte solution, and then $0<r\leq3\%$.

In a second aspect, the present application provides a battery cell, including a positive electrode plate, a negative electrode plate, a separator, and an electrolyte solution in the first aspect of the present application.

In any embodiment, the battery cell includes a lithium secondary battery cell.

In any embodiment, the positive electrode plate includes a first positive electrode active material which includes one or more of a lithium transition metal oxide with a general formula of $Li_aNi_bCo_cM_dO_eA_f$ and modified compounds

thereof, where $0.8 \leq a \leq 1.2$, $0.8 \leq b < 1$, $0 < c < 0.2$, $0 < d < 0.2$, $1 \leq e \leq 2$, $0 \leq f \leq 1$, M includes one or more of Mn, Al, Zr, Zn, Cu, Cr, Mg, Fe, V, Ti, and B, and A includes one or more of N, F, S, and Cl. A positive electrode active material with a high nickel content has a high voltage platform and high gram capacity, which is beneficial to improving the energy density of the battery, but the thermal stability and cycling stability thereof are poor. The combined use of the positive electrode active material with a high nickel content and the electrolyte solution provided in the embodiments of the present application may give full play to the advantages of the positive electrode active material with a high nickel content, thereby enabling the battery to have both high energy density and a good high-temperature cycling performance.

In any embodiment, the negative electrode plate includes one or more of natural graphite, artificial graphite, soft carbon, hard carbon, a silicon-based material, a tin-based material, and lithium titanate.

In a third aspect, the present application provides a preparation method for a battery cell, including the following steps: providing a battery container including a positive electrode plate, a negative electrode plate, and a separator; and injecting the electrolyte solution in the first aspect of the present application into the battery container to obtain the battery cell.

In a fourth aspect, the present application provides a battery, including the battery cell in the second aspect of the present application or the battery cell prepared by the preparation method in the third aspect of the present application.

In a fifth aspect, the present application provides an electrical apparatus, including the battery in the fourth aspect of the present application.

The electrical apparatus in the present application includes the battery provided in the present application, and thus has at least the same advantages as the battery.

## BRIEF DESCRIPTION OF DRAWINGS

To more clearly illustrate the technical solutions of embodiments of the present application, the following provides a brief description of the accompanying drawings used in the embodiments of the present application. It is evident that the drawings described below show only some embodiments of the present application. For those of ordinary skill in the art, other drawings may also be obtained based on the drawings without any creative effort.

FIG. 1 is a schematic view of an embodiment of a battery cell of the present application;
FIG. 2 is a schematic exploded view of the embodiment of the battery cell in FIG. 1;
FIG. 3 is a schematic view of an embodiment of a battery module of the present application;
FIG. 4 is a schematic view of an embodiment of a battery pack of the present application.
FIG. 5 is a schematic exploded view of the embodiment of the battery pack as shown in FIG. 4; and
FIG. 6 is a schematic view of an embodiment of an electrical apparatus including a battery of the present application as a power source.

The drawings may not be drawn according to the actual scale. List of reference numerals: 1, battery pack; 2, upper box body; 3, lower box body; 4, battery module; 5, battery cell; 51, housing; 52, electrode assembly; 53, cover plate.

## DETAILED DESCRIPTION

Embodiments of an electrolyte solution, a battery cell and a preparation method therefor, a battery, and an electrical apparatus of the present application are specifically disclosed below with appropriate reference to the detailed description of the drawings. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for

example, an integer of 2, 3, 4, 5, 6, 7, 8, 9, 10, 11, 12, and the like.

Unless otherwise specifically stated, all embodiments and optional embodiments of the present application may be combined with each other to form new technical solutions, and such technical solutions should be considered as being included in the disclosure of the present application.

Unless otherwise specifically stated, all technical features and optional technical features of the present application may be combined with each other to form new technical solutions, and such technical solutions should be considered as being included in the disclosure of the present application.

Unless otherwise specifically stated, all steps in the present application may be performed sequentially or randomly, and are preferably performed sequentially. For example, the method includes steps (a) and (b), indicating that the method may include steps (a) and (b) performed sequentially, or may include steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specifically stated, the "including" and "comprising" mentioned in the present application mean open-ended, or may be closed-ended. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Unless otherwise particularly stated, in the present application, the terms "first", "second", "third", "fourth" and the like are used to distinguish different objects, not to describe a particular sequence or primary-secondary relationship.

In the present application, the terms "a plurality of" and "multiple" refer to two or more.

Unless otherwise stated, the terms used in the present application have the well-known meanings commonly understood by those skilled in the art.

Unless otherwise stated, numerical values of parameters mentioned in the present application may be measured using various testing methods commonly used in the art. For example, the numerical values may be measured according to testing methods given in the embodiments of the present application. Unless otherwise stated, all parameters were tested at 25°C.

In the present application, a "fluoroalkyl group" may be a partially fluorinated alkyl group or a fully fluorinated alkyl group. The fluoroalkyl group encompasses a fluoro-straight-chain alkyl group and a fluoro-branched-chain alkyl group.

In various embodiments, a C1-C6 fluoroalkyl group, i.e., a fluoroalkyl group, may contain 1-6 carbon atoms.

At various places in this specification, substituents of compounds are disclosed in groups or in ranges. It is expressly intended that this description includes every individual sub-combination of members of these groups and ranges. For example, the term "C1-C6 fluoroalkyl group" is specifically intended to disclose individually a C1, C2, C3, C4, C5, C6, C1-C6, C1-C5, C1-C4, C1-C3, C1-C2, C2-C6, C2-C5, C2-C4, C2-C3, C3-C6, C3-C5, C3-C4, C4-C6, C4-C5, or C5-C6 fluoroalkyl group.

The battery mentioned in the embodiments of the present application may be a single physical module including one or more battery cells to provide a higher voltage and capacity. For example, the battery mentioned in the present application may include a battery cell, a battery module, a battery pack, or the like.

The battery cell is a smallest unit that makes up the battery, and capable of achieving the charging and discharging functions separately. The battery cell may be in a cylindrical shape, a rectangular solid shape or in other shapes, which is not limited in the embodiments of the present application. FIG. 1 is a battery cell 5 in a rectangular solid structure as an example.

When a plurality of battery cells are provided, the plurality of battery cells are connected in series, in parallel, or in series and parallel through bus components. In some embodiments, the battery may be a battery module, and when a plurality of battery cells are provided, the plurality of battery cells are arranged and fixed to form a battery module. In some embodiments, the battery may be a battery pack. The battery pack includes a box body and a battery cell. The battery cell or the battery module is accommodated in the box body. In some embodiments, the box body may serve as a part of a chassis structure of a vehicle. For example, a part of the box body may become at least a part of a floor of the vehicle, or a part of the box body may become at least a part of a cross beam and a longitudinal beam of the vehicle.

In some embodiments, the battery may be an energy storage apparatus. The energy storage apparatus includes an energy storage container, an energy storage electric cabinet, etc.

The battery cell generally includes an electrode assembly and an electrolyte solution. The electrode assembly generally includes a positive electrode plate and a negative electrode plate, and the electrode assembly may be of a wound structure or a stacked structure, which is not limited in the embodiments of the present application.

The battery cell may further include an outer package which may be configured to encapsulate the electrode assembly and the electrolyte solution. The outer package may be a hard shell, such as a hard plastic shell, an aluminum

shell, or a steel shell. The outer package may also be a soft package, such as a pouch-type soft package. A material of the soft package may be plastic, such as one or more of polypropylene (PP), polybutylene terephthalate (PBT), and polybutylene succinate (PBS).

In some embodiments, as shown in FIG. 2, the outer package may include a housing 51 and a cover plate 53. The housing 51 may include a bottom plate and side plates connected to the bottom plate, and the bottom plate and the side plates define an accommodating cavity. The housing 51 has an opening in communication with the accommodating cavity, and the cover plate 53 is configured to cover the opening to close the accommodating cavity. The electrode assembly 52 is encapsulated in the accommodating cavity. The number of the electrode assembly 52 included in the battery cell 5 may be one or more, and may be adjusted according to requirements.

In some embodiments, battery cells may be assembled into a battery module, the number of the battery cells included in the battery module may be multiple, and the specific number may be adjusted according to the application and capacity of the battery module. FIG. 3 is a schematic view of a battery module 4 as an example. As shown in FIG. 3, in the battery module 4, a plurality of battery cells 5 may be sequentially arranged in a length direction of the battery module 4. Of course, any other arrangements are also possible. The plurality of battery cells 5 may further be fixed by fasteners.

Optionally, the battery module 4 may further include a shell having an accommodating space, and the plurality of battery cells 5 are accommodated in the accommodating space.

In some embodiments, the above battery modules may also be assembled into a battery pack, and the number of the battery modules included in the battery pack may be adjusted according to the application and capacity of the battery pack.

FIG. 4 and FIG. 5 are schematic views of a battery pack 1 as an example. As shown in FIG. 4 and FIG. 5, the battery pack 1 may include a box body and a plurality of battery modules 4 arranged in the box body. The box body includes an upper box body 2 and a lower box body 3, where the upper box body 2 is configured to cover the lower box body 3 to form an enclosed space for accommodating the battery modules 4. The plurality of battery modules 4 may be arranged in the box body in any manner.

An electrolyte solution is one of the key factors affecting performances of a battery. As the requirements of people for the energy density of the battery become higher and higher, a ternary material, especially a high-nickel ternary material, has attracted widespread attention due to a high voltage platform and high gram capacity thereof. However, the thermal stability and cycling stability of the ternary material are not excellent enough. At the same time, side reactions between the electrolyte solution and a positive electrode active material may also increase under a high temperature and a high voltage, consequently affecting the use of the battery.

In view of this, the inventors improved the electrolyte solution.

The electrolyte solution provided in the embodiments of the present application may be applied to a battery cell. The battery cell may be a lithium secondary battery cell.

The electrolyte solution includes a non-aqueous solvent and an electrolyte salt. The non-aqueous solvent includes ethylene carbonate (EC), and a weight content of the EC in the non-aqueous solvent is denoted by x, based on a total weight of the non-aqueous solvent; the electrolyte salt includes a first electrolyte salt represented by formula (1) and a second electrolyte salt represented by formula (2), and a weight content of the first electrolyte salt in the electrolyte solution is denoted by y, and a weight content of the second electrolyte salt is denoted by z, based on a total weight of the electrolyte solution; $R_1$ and $R_2$ each independently include a fluorine atom or a C1-C6 fluoroalkyl group, $R_3$ includes a fluorine atom or a C1-C6 fluoroalkyl group, and $M_1$ and $M_2$ each independently include one or more of Li, Na, and K; where $5\% \leq x \leq 25\%$, $0.75 \leq x/y \leq 5$, and $120 \leq x/z \leq 3000$.

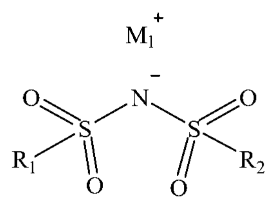

Formula (1)

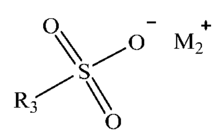

Formula (2)

The EC is widely used as a non-aqueous solvent for electrolyte solutions due to a high dielectric constant thereof.

In electrolyte solutions of current commercial batteries, the weight content of the EC is usually 30% or above, which thus may make the electrolyte solution have high ionic conductivity. However, the EC is unstable at a high temperature, and a high content of the EC may affect the high-temperature performance of the battery.

The inventors have found through research that by using a low content of the EC (accounting for 5%-25% of the total weight of the non-aqueous solvent) in combination with the first electrolyte salt represented by formula (1) and the second electrolyte salt represented by formula (2), and by reasonably adjusting the content relationship between the three, the battery may have a good high-temperature cycling performance.

Compared with the electrolyte solutions of current commercial batteries, the electrolyte solution provided in the embodiments of the present application has a lower EC content, and the weight thereof is 5%-25% of the total weight of the non-aqueous solvent, thereby being capable of reducing the adverse effects of a high EC content on the high temperature performance of the battery.

The first electrolyte salt represented by formula (1) has the characteristics of high thermal stability and being not prone to hydrolysis, which is helpful to form an interfacial film with high thermal stability on the surface of a negative electrode active material, thereby reducing side reactions between the negative electrode active material and the electrolyte solution. In addition, an anion of the first electrolyte salt is a weakly coordinated anion centered on N, containing a conjugated group and a fluorine atom and/or a fluoroalkyl group with a strong electron-attracting property, an anion charge is highly delocalized, and an acting force between the anion and a metal $M_1$ ion is weak. Therefore, the first electrolyte salt also has relatively low lattice energy and is prone to be dissociated, thereby also contributing to improving the ionic conductivity of the electrolyte solution and reducing the viscosity of the electrolyte solution.

However, the first electrolyte salt is prone to corrode a positive electrode current collector (e.g., aluminum foil), thereby being capable of increasing side reactions between a positive electrode active material and the electrolyte solution, and then easily affecting the high-temperature cycling performance of the battery.

The inventors have found through research that by making the electrolyte solution include the first electrolyte salt represented by formula (1), and adjusting the relationship between the weight content x of the EC in the non-aqueous solvent and the weight content y of the first electrolyte salt in the electrolyte solution so that $0.75 \leq x/y \leq 5$ is satisfied, the synergistic effect of the EC and the first electrolyte salt may be fully exerted. By using the first electrolyte salt in the electrolyte solution, the thermal stability of the electrolyte solution may be improved, the hydrolysis of the electrolyte solution may be reduced, and the deficiency of the low EC content in the ionic conductivity of the electrolyte solution may be compensated for; the EC and the anion of the first electrolyte salt have a certain binding force, thereby being capable of reducing the corrosion of the first electrolyte salt on the positive electrode collector, and further reducing the side reactions between the positive electrode active material and the electrolyte solution. Therefore, by adjusting $0.75 \leq x/y \leq 5$, the battery may have a good high-temperature cycling performance.

When x/y is less than 0.75, the content of the EC in the non-aqueous solvent is relatively small while the content of the first electrolyte salt in the electrolyte solution is relatively large. In this case, some anions of the first electrolyte salt cannot combine with EC molecules, resulting in more serious corrosion of the anion of the first electrolyte salt on the positive electrode collector under a high temperature and a high voltage, which in turn deteriorates the high-temperature cycling performance of the battery.

When x/y is greater than 5, the content of the EC in the non-aqueous solvent is relatively high while the content of the first electrolyte salt in the electrolyte solution is relatively low. In this case, there are more free EC molecules in the electrolyte solution, which may also deteriorate the high-temperature cycling performance of the battery.

In some embodiments, optionally, $0.86 \leq x/y \leq 3$, and $1 \leq x/y \leq 2$. Thereby, the synergistic effect between the EC and the first electrolyte salt may be better exerted, and the high-temperature cycling performance of the battery may be further improved.

The second electrolyte salt represented by formula (2) has high thermal stability and thus may improve the charge and discharge characteristics of the battery at a high temperature. At the same time, the second electrolyte salt may form a film on the surface of the negative electrode active material, and may also form a film on the surface of the positive electrode active material, and may also adjust the composition of the interfacial film, thereby being capable of reducing the side reactions between the negative electrode active material and the electrolyte solution and the side reactions between the positive electrode active material and the electrolyte solution. However, the ionic conductivity of the second electrolyte salt is low, and when the content of the second electrolyte salt is too high, the content of inorganic components in the interfacial film may increase, thereby causing the flexibility of the interfacial film to deteriorate. After multiple charging and discharging, the interfacial film is prone to cracking, which may in turn deteriorate the high-temperature cycling performance of the battery.

The inventors have found through research that by making the electrolyte solution include the second electrolyte salt represented by formula (2), and adjusting the relationship between the weight content x of the EC in the non-aqueous solvent and the weight content z of the second electrolyte salt in the electrolyte solution so that $120 \leq x/y \leq 3000$ is satisfied, the synergistic effect of the EC and the second electrolyte salt may be fully exerted. By adopting a suitable content of the second electrolyte salt, the composition of the interfacial film may be adjusted so that the interfacial film has a suitable

content of inorganic components and a suitable content of organic components, thereby obtaining a dense, uniform and flexible interfacial film, which may play the role of long-term protection of the active material by the interfacial film and reduce the side reactions between the negative electrode active material and the electrolyte solution and the side reactions between the positive electrode active material and the electrolyte solution. Therefore, by adjusting 120≤x/z≤3000, the cycling stability of the battery may be improved, so that the battery can have a longer high-temperature cycle life.

When x/z is less than 120, the content of the EC in the non-aqueous solvent is relatively small while the content of the second electrolyte salt in the electrolyte solution is relatively large. In this case, the interfacial film formed on the surface of the negative electrode active material has a high content of inorganic components. The inorganic components usually have high rigidity, which leads to poor elasticity and flexibility of the interfacial film, and then deteriorates the high-temperature cycling performance of the battery.

When x/y is greater than 3000, the content of the EC in the non-aqueous solvent is relatively high while the content of the second electrolyte salt in the electrolyte solution is relatively low. In this case, the content of organic components in the interfacial film formed on the surface of the negative electrode active material is relatively high. At a high temperature, the organic components in the interfacial film are more prone to be dissolved into the electrolyte solution, which may also deteriorate the high-temperature cycling performance of the battery.

In some embodiments, optionally, 160≤x/z≤1500, 300≤x/z≤1200, 400≤x/z≤1000, and 400≤x/z≤800. Thereby, the synergistic effect between the EC and the second electrolyte salt may be better exerted, and the high-temperature cycling performance of the battery may be further improved.

In some embodiments, optionally, 8%≤x≤20%, and 10%≤x≤18%. By adjusting the weight content x of the EC in the non-aqueous solvent within the above range, the high-temperature cycling performance of the battery may be further improved.

In some embodiments, optionally, 2.4%≤y≤18%, 4%≤y≤15%, 6%≤y≤12%, and 6%≤y≤10%. By adjusting the weight content y of the first electrolyte salt in the electrolyte solution within the above range, the high-temperature cycling performance of the battery may be further improved.

In some embodiments, optionally, 0.004%≤z≤0.10%, 0.008%≤z≤0.075%, 0.01%≤z≤0.06%, and 0.01%≤z≤0.04%. By adjusting the weight content z of the second electrolyte salt in the electrolyte solution within the above range, the high-temperature cycling performance of the battery may be further improved.

In some embodiments, 10%≤x≤18%, 1≤x/y≤2, 300≤x/z≤1200, 6%≤y≤12%, and 0.008%≤z≤0.075%. Thereby, the synergistic effect among the EC, the first electrolyte salt, and the second electrolyte salt may be better exerted, and the high-temperature cycling performance of the battery may be further improved.

$M_1$ includes one or more of Li, Na, and K. In some embodiments, $M_1$ may include one or both of Li and Na, and optionally includes Li.

$M_2$ includes one or more of Li, Na, and K. In some embodiments, $M_2$ may include one or both of Li and Na, and optionally includes Li.

In some embodiments, $R_1$ and $R_2$ may each independently include a fluorine atom, a trifluoromethyl group, a pentafluoroethyl group, a heptafluoropropyl group, or a nonafluorobutyl group. When $R_1$ and $R_2$ are within the above range, it is also helpful to form a thinner interfacial film, thereby further helping to reduce the interfacial ion impedance and improve the kinetic performance of the battery.

In some embodiments, the first electrolyte salt may include one or more of the following:

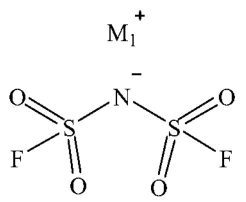
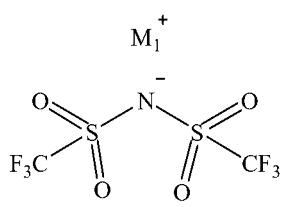
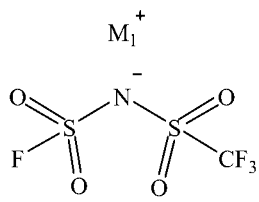

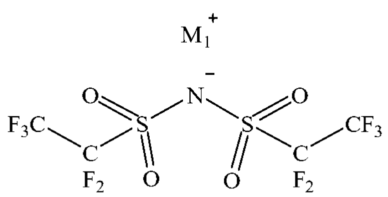
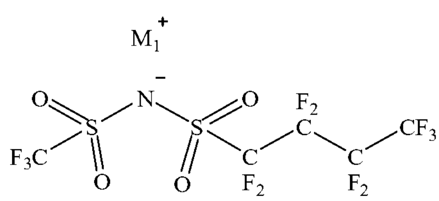
.

In some embodiments, the first electrolyte salt may include one or more of A1 to A7:

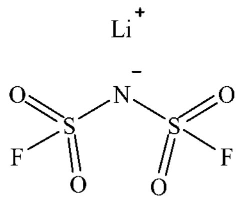

A1

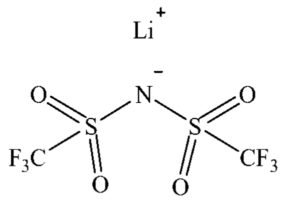

A2

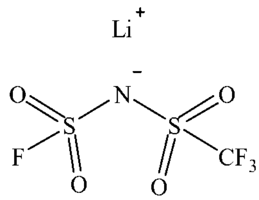

A3

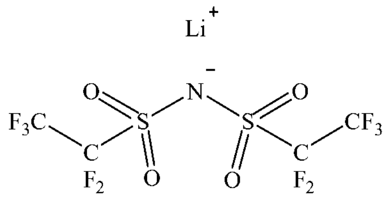

A4

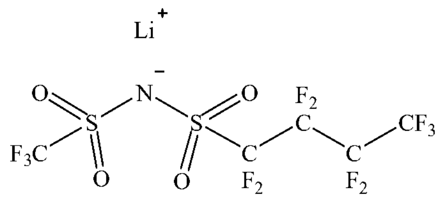

A5

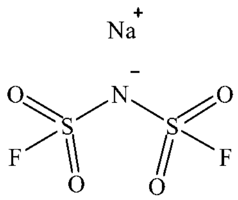

A6

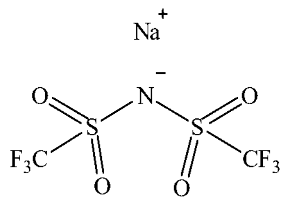

A7

.

When being within the above range, the first electrolyte salt has higher thermal stability and is less prone to hydrolysis, which is helpful to improve the ionic conductivity of the electrolyte solution, thereby helping to further improve the high-temperature cycling performance of the battery. In addition, it is also helpful to form a thinner interfacial film, thereby further helping to reduce the interfacial ion impedance and improve the kinetic performance of the battery.

In some embodiments, $R_3$ may include a fluorine atom, a trifluoromethyl group, or a pentafluoroethyl group. When $R_3$ is within the above range, it is also helpful to form a thinner interfacial film, thereby helping to reduce the interfacial ion impedance and improve the kinetic performance of the battery.

In some embodiments, the second electrolyte salt may include one or more of the following:

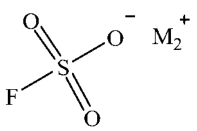

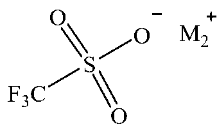

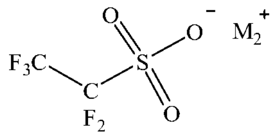

.

In some embodiments, the second electrolyte salt may include one or more of B1 to B6:

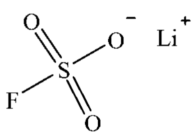

B1

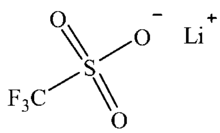

B2

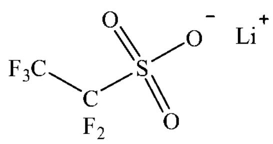

B3

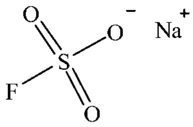

B4

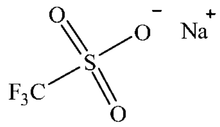

B5

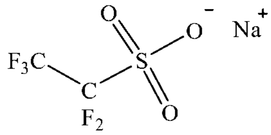

B6

.

When being within the above range, the second electrolyte salt has higher thermal stability, and the content of inorganic components and organic components in an interfacial film may be better adjusted, which thus is helpful to obtain a thinner and more flexible interfacial film, thereby helping to further improve the high-temperature cycling performance of the battery. In addition, it is also helpful to reduce the interfacial ion impedance and improve the kinetic performance of the battery.

In some embodiments, the non-aqueous solvent may further include chain carbonate. The chain carbonate may adjust the viscosity of the electrolyte solution, thereby being capable of further improving the ionic conductivity of the electrolyte solution and helping to improve the high-temperature cycling performance of the battery.

In some embodiments, a weight content of the chain carbonate in the non-aqueous solvent is denoted by m, based on the total weight of the non-aqueous solvent, then m≥70%, for example, m may be 75%, 78%, 80%, 82%, 85%, 88%, 90%, 95%, or a range consisting of any of the above values. Optionally, 70%≤m≤95%, 75%≤m≤95%, 75%≤m≤90%, 80%≤m≤90%, and 82%≤m≤88%.

In some embodiments, the chain carbonate may include one or more of ethyl methyl carbonate (EMC), diethyl carbonate (DEC), dimethyl carbonate (DMC), dipropyl carbonate (DPC), methyl propyl carbonate (MPC), and ethyl propyl carbonate (EPC). Optionally, the chain carbonate may include one or more of EMC, DEC, and DMC.

In some embodiments, the non-aqueous solvent may further include propylene carbonate (PC). Optionally, a weight content of the PC in the non-aqueous solvent is denoted by n, based on the total weight of the non-aqueous solvent, and then 0<n≤5%.

In some embodiments, the non-aqueous solvent may further include other solvents, for example, the non-aqueous solvent may further include one or more of methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS), and ethylsulfonylethane (ESE), which is not limited in the embodiments of the present application.

In some embodiments, the electrolyte solution may further include a third electrolyte salt represented by formula (3), and $M_3$ includes one or more of Li, Na, and K. Optionally, $M_3$ includes one or both of Li and Na, and further optionally includes Li.

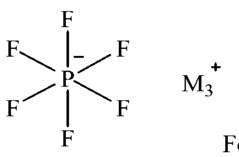

Formula (3)

The third electrolyte salt represented by formula (3) has appropriate solubility, high ionic conductivity, and a wide electrochemical window in the non-aqueous solvent, thereby being capable of improving the ionic conductivity of the electrolyte solution, further passivating a positive electrode current collector, and reducing the corrosion of the first electrolyte salt on the positive electrode current collector. Therefore, when the electrolyte solution further includes the third electrolyte salt represented by formula (3), it helps to further improve the high-temperature cycling performance of the battery.

In some embodiments, a weight content of the third electrolyte salt in the electrolyte solution is denoted by p, based on the total weight of the electrolyte solution, and then 10%≤y+p≤25%, optionally, 12%≤y+p≤20%. Thus, this may make the electrolyte solution have high ionic conductivity and low viscosity, so that the high-temperature cycling performance of the battery may further be improved.

In some embodiments, the electrolyte solution may further include a fourth electrolyte salt represented by formula (4), and $M_4$ includes one or more of Li, Na, and K. Optionally, $M_4$ includes one or both of Li and Na, and further optionally includes Li.

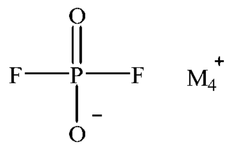

Formula (4)

The fourth electrolyte salt represented by formula (4) usually decomposes in the electrolyte solution earlier than the non-aqueous solvent, thereby being capable of generating a low-impedance interfacial film at a positive electrode. The interfacial film may protect a positive electrode active material, reduce the oxidative decomposition of the electrolyte solution on a positive electrode surface, reduce the gas production rate of the battery, improve the high-temperature storage performance of the battery, and further reduce the charge transfer resistance of the positive electrode, thereby improving the kinetic performance of the positive electrode. At the same time, the fourth electrolyte salt represented by formula (4) may also generate a low-impedance interfacial film at a negative electrode, thereby protecting a negative electrode active material and reducing the reductive decomposition of the electrolyte solution on a negative electrode surface. Therefore, when the electrolyte solution further includes the fourth electrolyte salt represented by formula (4), the high-temperature storage performance and/or kinetic performance of the battery may also be improved.

In some embodiments, a weight content of the fourth electrolyte salt in the electrolyte solution is denoted by q, based on the total weight of the electrolyte solution, and then $0<q\leq0.5\%$, optionally, $0.1\%\leq q\leq0.4\%$.

In some embodiments, the electrolyte solution solution may further include other electrolyte salts. For example, an anion of the electrolyte salt may further include one or more of a perchlorate anion ($ClO_4^-$), a hexafluoroarsenate anion ($AsF_6^-$), a difluoro(oxalato)borate anion ($DFOB^-$), a bis(oxalato)borate anion ($BOB^-$), a difluoro bis(oxalato)phosphate anion ($DFOP^-$), and a tetrafluoro(oxalato)phosphate anion ($TFOP^-$); and a cation of the electrolyte salt may include one or more of $Li^+$, $Na^+$, and $K^+$, optionally include one or two of $Li^+$ and $Na^+$, and further optionally include $Li^+$.

In some embodiments, the electrolyte solution may further include an additive, and the additive includes one or two of 1,3-propanesultone (PS) and fluoroethylene carbonate (FEC).

The PS and the FEC may form an interfacial film at a negative electrode, and the stability of the negative electrode interfacial film is improved, so that a negative electrode active material may be better protected and side reactions between the negative electrode active material and the electrolyte solution are reduced, thereby improving the high-temperature cycling performance of the battery.

The PS may also improve the flexibility of the positive electrode interfacial film, allowing the battery to remain stable during long-term cycling; and the PS may also reduce the gas production rate of the battery and improve the high-temperature storage performance of the battery.

The LUMO energy of the FEC is much lower than that of the EC, so the decomposition thereof in the electrolyte solution is usually earlier than that of the non-aqueous solvent, which thus may reduce the decomposition of the electrolyte solution, reduce the gas production rate of the battery, and improve the high-temperature storage performance of the battery; the FEC may also increase the content of inorganic components in the negative electrode interfacial film, which thus may improve the mechanical strength of the negative electrode interfacial film, thereby being capable of improving the cycling stability of the negative electrode interfacial film; and the FEC also helps to form a thin and stable interfacial film at the negative electrode and reduce the diffusion impedance of ions, and further helps to reduce the low-temperature impedance of the negative electrode interfacial film, thereby improving the low-temperature performance of the battery.

In some embodiments, a weight content of the additive in the electrolyte solution is denoted by r, based on the total weight of the electrolyte solution, and then $0<r\leq3\%$.

In some embodiments, the electrolyte solution may further include other additives, such as an additive for improving the overcharge performance of the battery, an additive for improving the low-temperature power performance of the battery, etc., which is not limited in the embodiments of the present application.

The electrolyte solution provided in the embodiment of the present application may be prepared according to a conventional method in the art. For example, the non-aqueous solvent, the electrolyte salt, optional additives, and other components may be mixed uniformly to obtain the electrolyte solution. There is no particular restriction on the order of adding the materials. For example, the electrolyte salt, optional additives, and other components may be added to the non-aqueous solvent and mixed uniformly to obtain the electrolyte solution.

The components and the contents thereof in the electrolyte solution may be measured according to methods known in the art. For example, the components and the contents thereof in the electrolyte solution may be measured through the gas chromatography-mass spectrometry (GC-MS), ion chromatography (IC), liquid chromatography (LC), nuclear magnetic resonance (NMR) spectroscopy, and the like.

[Positive Electrode Plate]

The battery cell further includes a positive electrode plate.

The positive electrode plate includes a positive electrode current collector and a positive electrode film layer arranged on at least one surface of the positive electrode current collector. For example, the positive electrode current collector has two surfaces opposite in a thickness direction thereof, and the positive electrode film layer is located on either or both of the two opposite surfaces of the positive electrode current collector.

A metal foil or a composite current collector may be used as the positive electrode current collector. As an example of the metal foil, an aluminum foil may be used. The composite current collector may include a high molecular material substrate layer and a metal material layer formed on at least one surface of the high molecular material substrate layer. As an example, a metal material may include one or more of aluminum, an aluminum alloy, nickel, a nickel alloy, titanium, a titanium alloy, silver, and a silver alloy. As an example, the high molecular material substrate layer may include one or more of polypropylene (PP), polyethylene terephthalate (PET), polybutylene terephthalate (PBT), polystyrene (PS), and polyethylene (PE).

The positive electrode film layer typically includes a positive electrode active material, an optional a binder, and an optional conductive agent. The positive electrode film layer is usually formed by coating a positive electrode slurry on the positive electrode current collector, followed by drying and cold pressing. The positive electrode slurry is generally formed by dispersing the positive electrode active material, the optional binder, the optional conductive agent, and any other components in a solvent and sufficiently stirring a mixture.

The solvent may be N-methyl pyrrolidone (NMP), but is not limited thereto.

As an example, the binder for the positive electrode film layer may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylate resin.

As an example, the conductive agent for the positive electrode film layer may include one or more of superconducting carbon, conductive graphite, acetylene black, carbon black, Ketjen black, carbon dots, carbon nanotubes, graphene, and carbon nanofibers.

In some embodiments, the positive electrode active material may include a first positive electrode active material. In some embodiments, the first positive electrode active material may include one or more of a lithium transition metal oxide with a general formula of $Li_aNi_bCo_cM_dO_eA_f$ and modified compounds thereof. $0.8 \leq a \leq 1.2$, $0.5 \leq b < 1$, $0 < c < 1$, $0 < d < 1$, $1 \leq e \leq 2$, $0 \leq f \leq 1$, M includes one or more of Mn, Al, Zr, Zn, Cu, Cr, Mg, Fe, V, Ti, and B, and A includes one or more of N, F, S, and Cl.

Optionally, $0.8 \leq b < 1$, $0 < c < 0.2$, and $0 < d < 0.2$. A positive electrode active material with a high nickel content has a high voltage platform and high gram capacity, which is beneficial to improving the energy density of the battery, but the thermal stability and cycling stability thereof are poor. The combined use of the positive electrode active material with a high nickel content and the electrolyte solution provided in the embodiments of the present application may give full play to the advantages of the positive electrode active material with a high nickel content, thereby enabling the battery to have both high energy density and a good high-temperature cycling performance.

As an example, the first positive electrode active material may include one or more of $LiNi_{1/3}Co_{1/3}Mn_{1/3}O_2$ (NCM333), $LiNi_{0.5}Co_{0.2}Mn_{0.3}O_2$(NCM523), $LiNi_{0.6}Co_{0.2}Mn_{0.2}O_2$(NCM622), $LiNi_{0.8}Co_{0.1}Mn_{0.1}O_2$(NCM811), $LiNi_{0.85}Co_{0.15}Al_{0.05}O_2$, and respective modified compounds thereof.

The modified compounds of the above positive electrode active materials may be obtained by performing doping modification and/or surface coating modification on the positive electrode active materials. Optionally, a coating layer may be a carbon coating layer. The carbon coating layer is beneficial for stabilizing the surface of the positive electrode active material, further reducing the charge transfer impedance of the positive electrode active material, and improving the kinetic performance of the positive electrode active material. Optionally, the carbon coating layer includes amorphous carbon, such as soft carbon, hard carbon, or a combination thereof.

$Li_aNi_bCo_cM_dO_eA_f$ may be prepared according to a conventional method in the art. An exemplary preparation method is as follows: a lithium source, a nickel source, a cobalt source, an M element precursor, and an optional A element precursor are mixed and then sintered. The sintering atmosphere may be an oxygen-containing atmosphere, for example, an air atmosphere or an oxygen atmosphere. The $O_2$ concentration of the sintering atmosphere is, for example, 70% to 100%. The sintering temperature and sintering time may be adjusted according to actual conditions. As an example, the lithium source includes, but is not limited to, one or more of lithium oxide ($Li_2O$), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), and lithium nitrate ($LiNO_3$). As an example, the nickel source includes, but is not limited to, one or more of nickel sulfate, nickel nitrate, nickel chloride, nickel oxalate, and nickel acetate. As an example, the cobalt source includes, but is not limited to, one or more of cobalt sulfate, cobalt nitrate, cobalt chloride, cobalt oxalate, and cobalt acetate. As an example, the M element precursor includes, but is not limited to, one or more of an oxide, a nitrate compound, a carbonate compound, hydroxide, and an acetate compound of an M element. As an example, the precursor of an element A includes but is not limited to one or more of ammonium fluoride, lithium fluoride, hydrogen fluoride, ammonium chloride, lithium chloride, hydrogen chloride, ammonium nitrate, ammonium nitrite, ammonium carbonate, ammonium bicarbonate, ammonium phosphate, phosphoric acid, ammonium sulfate, ammonium bisulfate, ammonium bisulfite, ammonium sulfite, ammonium hydrosulfide, hydrogen sulfide, lithium sulfide, ammonium sulfide, and elemental sulfur.

In some embodiments, the positive electrode active material does not exclude other components besides a lithium transition metal oxide with a molecular formula of $Li_aNi_bCo_cM_dO_eA_f$ and modified compounds thereof. For example, the positive electrode active material may also include a second positive electrode active material, which includes one or more of lithium cobalt oxide, lithium nickel oxide, lithium manganese oxide, lithium-containing phosphate, and respective modified compounds thereof. As an example, the lithium-containing phosphate may include one or more of lithium iron phosphate, composites of lithium iron phosphate and carbon, lithium manganese phosphate, composites of lithium manganese phosphate and carbon, lithium iron manganese phosphate, composites of lithium iron manganese phosphate and carbon, and respective modified compounds thereof.

In some embodiments, the weight percentage of the first positive electrode active material may be 80% to 99%, based on the total weight of the positive electrode film layer. For example, the weight percentage of the first positive electrode active material may be 80%, 81%, 82%, 83%, 84%, 85%, 86%, 87%, 88%, 89%, 90%, 91%, 92%, 93%, 94%, 95%, 96%, 97%, 98%, 99%, or a range consisting of any of the above values. Optionally, the weight percentage of the first positive electrode active material may be 85% to 99%, 90% to 99%, 95% to 99%, 80% to 98%, 85% to 98%, 90% to 98%, 95% to 98%, 80% to 97%, 85% to 97%, 90% to 97%, or 95% to 97%.

In some embodiments, a specific surface area of the positive electrode active material may be 0.3-3 $m^2/g$. When the specific surface area of the positive electrode active material is within the above range, the positive electrode active material may have good kinetic characteristics and may also reduce side reactions at a high temperature of the battery, thereby enabling the battery to have a good high-temperature cycling performance and kinetic performance.

The specific surface area of the positive electrode active material has a meaning well known in the art, and may be measured by using instruments and methods known in the art. For example, the specific surface area of the positive electrode active material may be tested using the nitrogen adsorption specific surface area analysis test method with reference to GB/T 19587-2017, and be calculated using the Brunauer Emmett Teller (BET) method. A testing instrument may be a Tri-Star 3020 specific surface area pore size analysis tester from Micromeritics Corporation of the United States.

In some embodiments, the compaction density of the positive electrode plate may be 2.9-3.6 $g/cm^3$. When the compaction density of the positive electrode plate is within the above range, the positive electrode plate may have good conductivity and good electrolyte solution wettability, thereby enabling the battery to have a good high-temperature cycling performance and dynamic performance.

The compaction density of the positive electrode plate has a meaning well-known in the art, and may be measured by using instruments and methods known in the art. The compaction density of the positive electrode plate = the areal density of the positive electrode film layer/the thickness of the positive electrode film layer. The thickness of the positive electrode film layer has a meaning well known in the art, may be measured by using instruments and methods known in the art, and for example, may be tested by using a tenthousandth micrometer. The areal density of the positive electrode film layer has a meaning well-known in the art, and may be tested by instruments and methods known in the art. For example, a single-sided coated and cold-pressed positive electrode plate (if it is a double-sided coated positive electrode plate, the positive electrode film layer on one side of the positive electrode plate may be wiped off first) may be taken, and punched into small disks with an area of $S_1$, and the weight of the disk is weighed and recorded as $M_1$; then, the positive electrode film layer of the above weighted positive electrode plate is wiped off, the weight of the positive electrode current collector is weighed, and recorded as $M_0$; and the areal density of the positive electrode plate is equal to $(M_1-M_0)/S_1$.

[Negative Electrode Plate]

The battery cell includes a negative electrode plate.

In some embodiments, the negative electrode plate includes a negative electrode current collector and a negative electrode film layer arranged on at least one surface of the negative electrode current collector. For example, the negative electrode current collector has two surfaces opposite in a thickness direction thereof, and the negative electrode film layer is located on either or both of the two opposite surfaces of the negative electrode current collector.

A metal foil or a composite current collector may be used as the negative electrode current collector. As an example of the metal foil, a copper foil may be used. The composite current collector may include a high molecular material substrate layer and a metal material layer formed on at least one surface of the high molecular material substrate layer. As an example, the metal material may include one or more of copper, a copper alloy, nickel, a nickel alloy, titanium, a titanium alloy, silver, and a silver alloy. As an example, the high molecular material substrate layer may include one or more of PP, PET, PBT, PS, and PE.

The negative electrode film layer typically includes a negative electrode active material, an optional binder, an optional conductive agent, and other optional auxiliaries. The negative electrode film layer is usually formed by coating a negative electrode slurry on the negative electrode current collector, followed by drying and cold pressing. The negative electrode slurry is generally formed by dispersing the negative electrode active material, the optional conductive agent, the

optional binder, and other optional auxiliaries in a solvent and sufficiently stirring a mixture.

The solvent may be NMP or deionized water, but is not limited thereto.

As an example, the binder for the negative electrode film layer may include one or more of styrene butadiene rubber (SBR), water-soluble unsaturated resin SR-1B, water-based acrylic resin (such as polyacrylic acid (PAA), polymethacrylic acid (PMAA), and sodium polyacrylate (PAAS)), polyacrylamide (PAM), polyvinyl alcohol (PVA), sodium alginate (SA), and carboxymethyl chitosan (CMCS).

As an example, the conductive agent for the negative electrode film layer may include one or more of superconducting carbon, acetylene black, carbon black, Ketjen black, carbon dots, carbon nanotubes, graphene, and carbon nanofibers. Other optional auxiliaries may include a thickener (e. g., sodium carboxymethyl cellulose (CMC-Na)), a positive temperature coefficient (PTC) thermistor material, or the like.

A material well-known in the art may be used as the negative electrode active material. As an example, the negative electrode active material may include one or more of natural graphite, artificial graphite, soft carbon, hard carbon, a silicon-based material, a tin-based material, and lithium titanate. The silicon-based material may include one or more of elemental silicon, silicon oxide, a silicon-carbon composite, a silicon-nitrogen composite, and a silicon alloy material. The tin-based material may include one or more of elemental tin, tin oxide, and tin alloy material. The present application is not limited to these materials, and other conventionally well-known materials that may be used as the negative electrode active material may also be used. One of these negative active materials may be used alone, or two or more of these positive active materials may be used in combination.

[Separator]

The battery cell further includes a separator.

The separator is arranged between the positive electrode plate and the negative electrode plate and serves the function of isolation. The type of the separator is not particularly limited in the present application, and any well-known film with a porous structure having good chemical stability and mechanical stability may be selected.

In some embodiments, the material of the separator may include one or more of glass fiber, non-woven cloth, PE, PP, and PVDF. The separator may be a single-layer film or a multi-layer composite film. When the separator is the multi-layer composite film, materials of the layers may be the same or different.

**Preparation Method**

An embodiment of the present application further provides a method for preparing a battery cell.

The method includes the following steps: providing a battery container including a positive electrode plate, a negative electrode plate and a separator; and injecting the electrolyte solution provided in the embodiment of the present application into the battery container including the positive electrode plate, the negative electrode plate, and the separator.

In some embodiments, the method may further include the following steps: making the positive electrode plate, the separator, and the negative electrode plate into an electrode assembly by a winding process and/or a stacking process, and placing the electrode assembly into the battery container.

The battery container may be an outer package. The outer package may be a hard shell, such as a hard plastic shell, an aluminum shell, or a steel shell. The outer package may also be a soft package, such as a pouch-type soft package. A material of the soft package may be plastic, such as one or more of PP, PBT, and PBS.

A plurality of battery cells may be further connected in series, in parallel or in series and parallel to form a battery module. A plurality of battery modules may be further connected in series, in parallel or in parallel-series connection to form a battery pack. In some embodiments, the plurality of battery cells may also directly form a battery pack.

Electrical **apparatus**

An embodiment of the present application further provides an electrical apparatus. The electrical apparatus includes the battery provided in the embodiment of the present application. The battery may be used as a power source of the electrical apparatus, or may be used as an energy storage unit of the electrical apparatus. The electrical apparatus may be, but is not limited to, a mobile device (e.g., a mobile phone, a tablet computer, and a laptop), an electric vehicle (e.g., an all-electric vehicle, a hybrid electric vehicle, a plug-in hybrid electric vehicle, an electric bicycle, an electric scooter, an electric golf cart, and an electric truck), an electric train, a ship and a satellite, an energy storage system, and the like.

The electrical apparatus may select the type of the battery, such as the battery cell, the battery module, or the battery pack, according to use requirements thereof.

FIG. 6 is a schematic view of an electrical apparatus as an example. The electrical apparatus is an all-electric vehicle, a hybrid electric vehicle, a plug-in hybrid electric vehicle, or the like. In order to meet the requirements of the electrical apparatus for high power and high energy density, a battery pack or a battery module may be used.

As another example, the electrical apparatus may be a mobile phone, a tablet computer, a laptop, etc. The electrical apparatus is generally required to be thin and light, and thus may use a battery cell as a power source.

## Examples

The following examples more specifically describe the contents disclosed in the present application. These examples are intended for illustrative purposes only, because various modifications and changes made within the scope of the contents disclosed in the present application will be apparent to those skilled in the art. Unless otherwise stated, all parts, percentages, and ratios reported in the following examples are based on the weight, all reagents used in the examples are either commercially available or synthesized according to conventional methods, and may be directly used without further processing, and all the instruments used in the examples are commercially available.

**Both Examples 1-26 and Comparative Examples 1-7 are prepared according to the method below.**

### Preparation of Positive Electrode Plate

A $LiNi_{0.8}Co_{0.1}Mn_{0.1}O_2$ positive electrode active material, a carbon black conductive agent, and a PVDF binder were fully stirred and mixed in an appropriate amount of NMP solvent in a weight ratio of 97.5: 1.4: 1.1 to form a uniform positive electrode slurry; and a surface of a positive electrode current collector aluminum foil was uniformly coated with the positive electrode slurry, and a positive electrode plate was obtained after drying and cold pressing.

### Preparation of Negative Electrode Plate

A graphite negative electrode active material, an SBR binder, a CMC-Na thickener, and a carbon black (Super P) conductive agent were sufficiently stirred and mixed in an appropriate amount of deionized water solvent in a weight ratio of 96.2: 1.8: 1.2: 0.8 to form a uniform negative electrode slurry; and a surface of a negative electrode current collector copper foil was uniformly coated with the negative electrode slurry, and a negative electrode plate was obtained after drying and cold pressing.

### Separator

A porous PE film was used as a separator.

### Preparation of Electrolyte solution

EC, PC, EMC, and DEC were uniformly mixed according to the weight contents shown in Table 1 to obtain a non-aqueous solvent. Electrolyte salts shown in Table 1 were dissolved in the above non-aqueous solvent according to the weight contents shown in Table 1, and stirred uniformly to obtain an electrolyte solution.

In Table 1, the weight content of the EC is denoted by x, the weight content of the PC is denoted by n, and the sum of the weight contents of the EMC and the DEC is denoted by m, all based on the total weight of the non-aqueous solvent, and the weight ratio of the EMC to the DEC is 1:1.

In Table 1, the weight content of the first electrolyte salt is denoted by y, the weight content of the second electrolyte salt is denoted by z, and the weight content of the third electrolyte salt is denoted by p, all based on the total weight of the electrolyte solution.

In Table 1, "/" indicates that the corresponding component was not added into the electrolyte solution.

### Preparation of Battery

A positive electrode plate, a separator, and a negative electrode plate were stacked and wound in sequence to obtain an electrode assembly; and the electrode assembly was placed into an outer package, into which the above electrolyte solution was injected, followed by the processes, such as encapsulation, standing, formation, and the like, to obtain the battery.

## Test Parts

(1) Test of High-temperature Cycling Performance

At 45°C, the battery was charged to 4.3 V at a constant current of 1 C, and further charged at a constant voltage until the current was 0.05 C; in this case, the battery was in a fully charged state, and the charge capacity in this case was

recorded, i.e., the 1st cycle charge capacity; and the battery was left to stand for 5 min, and then discharged to 2.8 V at a constant current of 1 C, which was a cyclic charge-discharge process, and the discharge capacity at this moment was recorded, i.e., the 1st cycle discharge capacity. The battery was subjected to a cycling charge and discharge test according to the above method, and the discharge capacity after each cycle was recorded. The capacity retention rate (%) of the battery after 600 cycles at 45°C = (the discharge capacity of the battery after 600 cycles/the discharge capacity of the battery at the 1st cycle) × 100%.

(2) Test of High-temperature Storage Performance of Battery

At 60°C, the battery was charged to 4.3 V at a constant current of 1 C, and then charged at a constant voltage until the current was 0.05 C, and in this case, the volume of the battery was tested with a drainage method and denoted by $V_0$; and the battery was placed into a 60°C thermostat, stored for 30 days, and then taken out, and in this case, the volume of the battery was tested with the drainage method and denoted by $V_1$. Volume expansion rate (%) of the battery after being stored at 60°C for 30 days = $[(V_1-V_0)/V_0] \times 100\%$.

Test results of Examples 1-26 and Comparative Examples 1-7 are given in Table 1.

Table 1

| Number | Solvent | | | First electrolyte salt | | Second electrolyte salt | | Third electrolyte salt | | x/y | x/z | Capacity retention rate (%) after 600 cycles at 45°C | Volume expansion rate (%) after storage at 60°C for 30 days |
|---|---|---|---|---|---|---|---|---|---|---|---|---|---|
| | EC | EMC+DEC | PC | Type | y | Type | z | Type | P | | | | |
| | x | m | n | | | | | | | | | | |
| Comparative Example 1 | 12% | 88% | / | / | / | / | / | $LiPF_6$ | 18% | / | / | 68.4 | 21.5 |
| Comparative Example 2 | 12% | 88% | / | / | / | B1 | 0.020% | $LiPF_6$ | 18% | / | 600 | 55.0 | 18.4 |
| Comparative Example 3 | 12% | 88% | / | A1 | 1% | B1 | 0.020% | $LiPF_6$ | 17% | 12.0 | 600 | 69.9 | 20.6 |
| Comparative Example 4 | 12% | 88% | / | A1 | 20% | B1 | 0.020% | / | / | 0.60 | 600 | 70.0 | 21.5 |
| Comparative Example 5 | 12% | 88% | / | A1 | 9% | / | / | $LiPF_6$ | 9% | 1.3 | / | 70.1 | 23.1 |
| Comparative Example 6 | 12% | 88% | / | A1 | 9% | B1 | 0.003% | $LiPF_6$ | 9% | 1.3 | 4000 | 73.0 | 22.4 |
| Comparative Example 7 | 12% | 88% | / | A1 | 9% | B1 | 0.200% | $LiPF_6$ | 9% | 1.3 | 60 | 80.1 | 16.6 |
| Example 1 | 12% | 88% | / | A1 | 2.4% | B1 | 0.020% | $LiPF_6$ | 15.6 | 5.0 | 600 | 88.3 | 13.6 |
| Example 2 | 12% | 88% | / | A1 | 4% | B1 | 0.020% | $LiPF_6$ | 14% | 3.0 | 600 | 88.6 | 12.9 |
| Example 3 | 12% | 88% | / | A1 | 6% | B1 | 0.020% | $LiPF_6$ | 12% | 2.0 | 600 | 89.0 | 12.5 |
| Example 4 | 12% | 88% | / | A1 | 9% | B1 | 0.020% | $LiPF_6$ | 9% | 1.3 | 600 | 91.5 | 11.5 |
| Example 5 | 12% | 88% | / | A1 | 12% | B1 | 0.020% | $LiPF_6$ | 6% | 1.0 | 600 | 90.1 | 12.5 |
| Example 6 | 12% | 88% | / | A1 | 14% | B1 | 0.020% | $LiPF_6$ | 4% | 0.86 | 600 | 89.1 | 13.5 |
| Example 7 | 12% | 88% | / | A1 | 16% | B1 | 0.020% | $LiPF_6$ | 2% | 0.75 | 600 | 88.4 | 14.1 |
| Example 8 | 12% | 88% | / | A1 | 9% | B1 | 0.004% | $LiPF_6$ | 9% | 1.3 | 3000 | 87.1 | 14.4 |
| Example 9 | 12% | 88% | / | A1 | 9% | B1 | 0.008% | $LiPF_6$ | 9% | 1.3 | 1500 | 87.5 | 14.1 |
| Example 10 | 12% | 88% | / | A1 | 9% | B1 | 0.010% | $LiPF_6$ | 9% | 1.3 | 1200 | 88.4 | 13.5 |
| Example 11 | 12% | 88% | / | A1 | 9% | B1 | 0.040% | $LiPF_6$ | 9% | 1.3 | 300 | 87.5 | 13.2 |
| Example 12 | 12% | 88% | / | A1 | 9% | B1 | 0.075% | $LiPF_6$ | 9% | 1.3 | 160 | 87.2 | 14.1 |
| Example 13 | 12% | 88% | / | A1 | 9% | B1 | 0.100% | $LiPF_6$ | 9% | 1.3 | 120 | 86.9 | 14.6 |
| Example 14 | 5% | 95% | / | A1 | 3.3% | B1 | 0.007% | $LiPF_6$ | 14.7% | 1.5 | 750 | 89.1 | 11.6 |
| Example 15 | 10% | 90% | / | A1 | 6.7% | B1 | 0.013% | $LiPF_6$ | 11.3% | 1.5 | 750 | 90.1 | 12.6 |

(continued)

| Number | Solvent | | | First electrolyte salt | | Second electrolyte salt | | Third electrolyte salt | | x/y | x/z | Capacity retention rate (%) after 600 cycles at 45°C | Volume expansion rate (%) after storage at 60°C for 30 days |
|---|---|---|---|---|---|---|---|---|---|---|---|---|---|
| | EC | EMC+DEC | PC | Type | y | Type | z | Type | P | | | | |
| | x | m | n | | | | | | | | | | |
| Example 16 | 12% | 88% | / | A1 | 8% | B1 | 0.016 | $LiPF_6$ | 10% | 1.5 | 750 | 91.1 | 12.6 |
| Example 17 | 15% | 85% | / | A1 | 10% | B1 | 0.020% | $LiPF_6$ | 8% | 1.5 | 750 | 91.3 | 11.8 |
| Example 18 | 18% | 82% | / | A1 | 12% | B1 | 0.024 | $LiPF_6$ | 6% | 1.5 | 750 | 90.3 | 12.4 |
| Example 19 | 20% | 80% | / | A1 | 13.3% | B1 | 0.027% | $LiPF_6$ | 4.7% | 1.5 | 750 | 89.1 | 13.1 |
| Example 20 | 25% | 75% | / | A1 | 16.7% | B1 | 0.033% | $LiPF_6$ | 1.3% | 1.5 | 750 | 89.7 | 13.3 |
| Example 21 | 25% | 70% | 5% | A1 | 16.7% | B1 | 0.033% | $LiPF_6$ | 1.3% | 1.5 | 750 | 89.5 | 13.5 |
| Example 22 | 12% | 88% | / | A2 | 9% | B1 | 0.020% | $LiPF_6$ | 9% | 1.3 | 600 | 91.2 | 11.8 |
| Example 23 | 12% | 88% | / | A4 | 9% | B1 | 0.020% | $LiPF_6$ | 9% | 1.3 | 600 | 91.0 | 12.1 |
| Example 24 | 12% | 88% | / | A6 | 9% | B1 | 0.020% | $LiPF_6$ | 9% | 1.3 | 600 | 90.7 | 11.5 |
| Example 25 | 12% | 88% | / | A1 | 9% | B2 | 0.020% | $LiPF_6$ | 9% | 1.3 | 600 | 90.5 | 11.4 |
| Example 26 | 12% | 88% | / | A1 | 9% | B4 | 0.020% | $LiPF_6$ | 9% | 1.3 | 600 | 90.4 | 11.1 |

It can be seen from the test results in Table 1 that by using a low content of the EC in combination with the first electrolyte salt represented by formula (1) and the second electrolyte salt represented by formula (2), and by reasonably adjusting the content relationship between the three so that $0.75 \le x/y \le 5$ and $120 \le x/z \le 3000$ are satisfied, the battery may have a good high-temperature cycling performance.

**Examples 27-29**

The preparation method for the battery is similar to that in Example 4, except for the preparation of the electrolyte solution. In Table 2, the weight content of the fourth electrolyte salt is denoted by q, and the weight content of the additive is denoted by r, both based on the total weight of the electrolyte solution. "/" indicates that the corresponding component is not added to the electrolyte solution.

In Example 27, 0.2% of $LiPO_2F_2$ was further added to the electrolyte solution provided in Example 4.

In Example 28, 0.2% of $LiPO_2F_2$ and 1% of PS were further added to the electrolyte solution provided in Example 4.

In Example 29, 0.2% of $LiPO_2F_2$ and 1% of FEC were further added to the electrolyte solution provided in Example 4.

Table 2

| | Fourth electrolyte salt | | Additive | | Capacity retention rate (%) after 600 cycles at 45°C | Volume expansion rate (%) after storage at 60°C for 30 days |
|---|---|---|---|---|---|---|
| | Type | q | Type | r | | |
| Example 4 | / | / | / | / | 91.5 | 11.5 |
| Example 27 | $LiPO_2F_2$ | 0.2% | / | / | 91.9 | 10.3 |
| Example 28 | $LiPO_2F_2$ | 0.2% | PS | 1% | 92.1 | 10.1 |
| Example 29 | $LiPO_2F_2$ | 0.2% | FEC | 1% | 92.7 | 10.2 |

It can be seen from the test results in Table 2 that when an appropriate content of the fourth electrolyte salt and/or the additive is further added into the electrolyte solution, the high-temperature cycling performance of the battery may be further improved, and the high-temperature storage performance of the battery may also be further improved.

It should be noted that the present application is not limited to the above examples. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

**Claims**

**1.** An electrolyte solution, comprising a non-aqueous solvent and an electrolyte salt, wherein

the non-aqueous solvent comprises ethylene carbonate, and a weight content of the ethylene carbonate in the non-aqueous solvent is denoted by x, based on a total weight of the non-aqueous solvent;

the electrolyte salt comprises a first electrolyte salt represented by formula (1) and a second electrolyte salt represented by formula (2), and a weight content of the first electrolyte salt in the electrolyte solution is denoted by y, and a weight content of the second electrolyte salt is denoted by z, based on a total weight of the electrolyte solution;

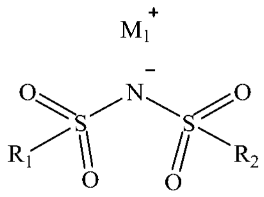

formula (1)

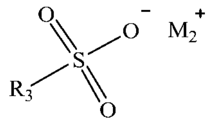

formula (2)

$R_1$ and $R_2$ each independently comprise a fluorine atom or a C1-C6 fluoroalkyl group, $R_3$ comprises a fluorine atom or a C1-C6 fluoroalkyl group, and $M_1$ and $M_2$ each independently comprise one or more of Li, Na, and K; wherein 5%≤x≤25%, 0.75≤x/y≤5, and 120<x/z<3000.

**2.** The electrolyte solution according to claim 1, wherein

$$8\%\leq x\leq 20\%,$$

optionally, 10%≤x≤18%; and/or,

$$0.86\leq x/y\leq 3,$$

optionally, 1≤x/y≤2; and/or,

$$160\leq x/z\leq 1500,$$

optionally, 300≤x/z≤1200.

**3.** The electrolyte solution according to claim 2, wherein

$$2.4\%\leq y\leq 18\%,$$

optionally, 6%≤y≤12%; and/or,

$$0.004\%\leq z\leq 0.10\%,$$

optionally, 0.008%≤z≤0.075%.

**4.** The electrolyte solution according to claim 1, wherein 10%≤x≤18%, 1≤x/y≤2, 300≤x/z≤1200, 6%≤y≤12%, and 0.008%≤z≤0.075%.

**5.** The electrolyte solution according to any one of claims 1-4, wherein

$R_1$ and $R_2$ each independently comprise a fluorine atom, a trifluoromethyl group, a pentafluoroethyl group, a heptafluoropropyl group, or a nonafluorobutyl group; and/or,
$R_3$ comprises a fluorine atom, a trifluoromethyl group, or a pentafluoroethyl group.

**6.** The electrolyte solution according to any one of claims 1-5, wherein

the first electrolyte salt comprises one or more of the following:

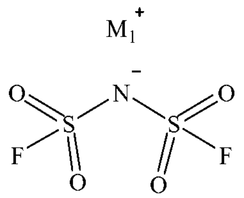

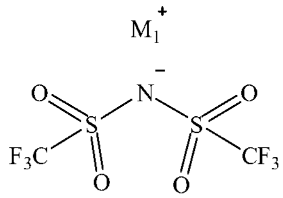

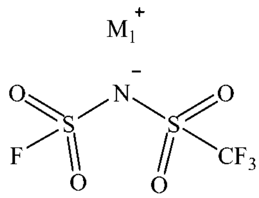

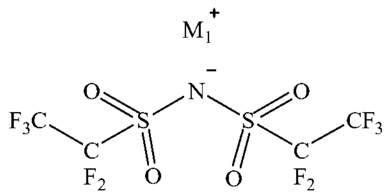

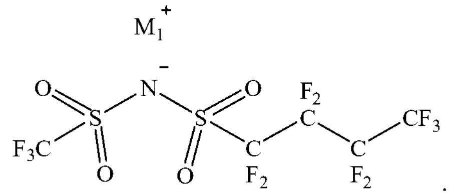

;

and/or,
the second electrolyte salt comprises one or more of the following:

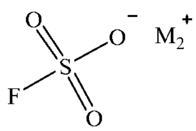

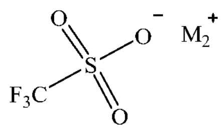

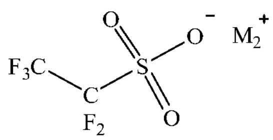

.

**7.** The electrolyte solution according to any one of claims 1-6, wherein

$M_1$ comprises one or both of Li and Na, and optionally comprises Li; and/or,
$M_2$ comprises one or both of Li and Na, and optionally comprises Li.

**8.** The electrolyte solution according to any one of claims 1-7, wherein the non-aqueous solvent further comprises chain carbonate;

optionally, a weight content of the chain carbonate in the non-aqueous solvent is denoted by m, based on the total weight of the non-aqueous solvent, and then $m \geq 70\%$; and/or,
optionally, the chain carbonate comprises one or more of ethyl methyl carbonate, diethyl carbonate, and dimethyl carbonate.

**9.** The electrolyte solution according to any one of claims 1-8, wherein the non-aqueous solvent further comprises propylene carbonate,
optionally, a weight content of the propylene carbonate in the non-aqueous solvent is denoted by n, based on the total weight of the non-aqueous solvent, and then $0 < n \leq 5\%$.

**10.** The electrolyte solution according to any one of claims 1-9, wherein the electrolyte solution further comprises a third electrolyte salt represented by formula (3),

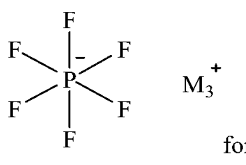

formula (3)

$M_3$ comprises one or more of Li, Na, and K;
optionally, $M_3$ comprises one or both of Li and Na, and further optionally comprises Li; and/or,
optionally, a weight content of the third electrolyte salt in the electrolyte solution is denoted by p, based on the total weight of the electrolyte solution, and then $10\% \leq y+p \leq 25\%$.

**11.** The electrolyte solution according to any one of claims 1-10, wherein the electrolyte solution further comprises a fourth electrolyte salt represented by formula (4),

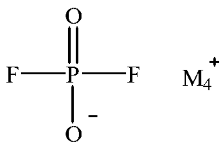

formula (4)

$M_4$ comprises one or more of Li, Na, and K;
optionally, $M_4$ comprises one or both of Li and Na, and further optionally comprises Li; and/or,
optionally, a weight content of the fourth electrolyte salt in the electrolyte solution is denoted by q, based on the total weight of the electrolyte solution, and then $0<q\leq0.5\%$, optionally, $0.1\%\leq q\leq0.4\%$.

**12.** The electrolyte solution according to any one of claims 1-11, wherein the electrolyte solution further comprises an additive, and the additive comprises one or two of 1,3-propanesultone and fluoroethylene carbonate,
optionally, a weight content of the additive in the electrolyte solution is denoted by r, based on the total weight of the electrolyte solution, and then $0<r\leq3\%$.

**13.** A battery cell, comprising a positive electrode plate, a negative electrode plate, a separator, and the electrolyte solution according to any one of claims 1-12.

**14.** The battery cell according to claim 13, wherein the battery cell comprises a lithium secondary battery cell.

**15.** The battery cell according to claim 13 or 14, wherein

the positive electrode plate comprises a first positive electrode active material which comprises one or more of a lithium transition metal oxide with a general formula of $Li_aNi_bCo_cM_dO_eA_f$ and modified compounds thereof, wherein $0.8\leq a\leq1.2$, $0.8\leq b<1$, $0<c<0.2$, $0<d<0.2$, $1\leq e\leq2$, $0\leq f\leq1$, M comprises one or more of Mn, Al, Zr, Zn, Cu, Cr, Mg, Fe, V, Ti, and B, and A comprises one or more of N, F, S, and Cl; and/or,
the negative electrode plate comprises one or more of natural graphite, artificial graphite, soft carbon, hard carbon, a silicon-based material, a tin-based material, and lithium titanate.

**16.** A preparation method for a battery cell, comprising the following steps:

providing a battery container comprising a positive electrode plate, a negative electrode plate, and a separator; and
injecting the electrolyte solution according to any one of claims 1-12 into the battery container to obtain the battery cell.

**17.** A battery, comprising the battery cell according to any one of claims 13-15 or the battery cell prepared by the preparation method according to claim 16.

**18.** An electrical apparatus, comprising the battery according to claim 16.

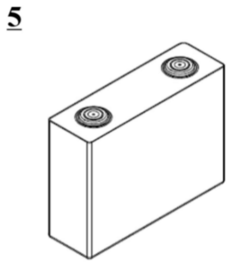


FIG. 1

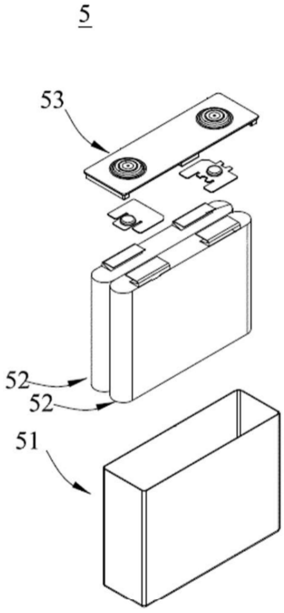


FIG. 2

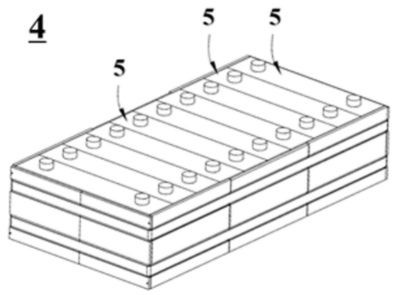


FIG. 3

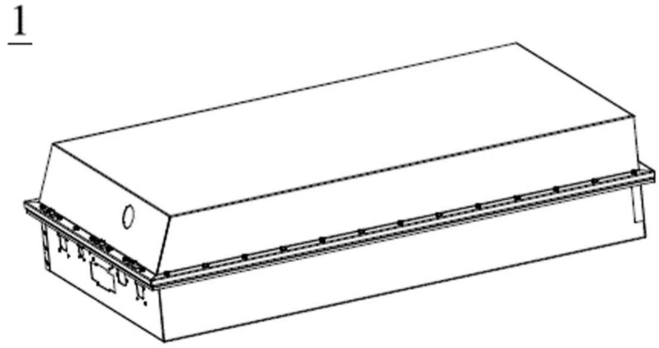


FIG. 4

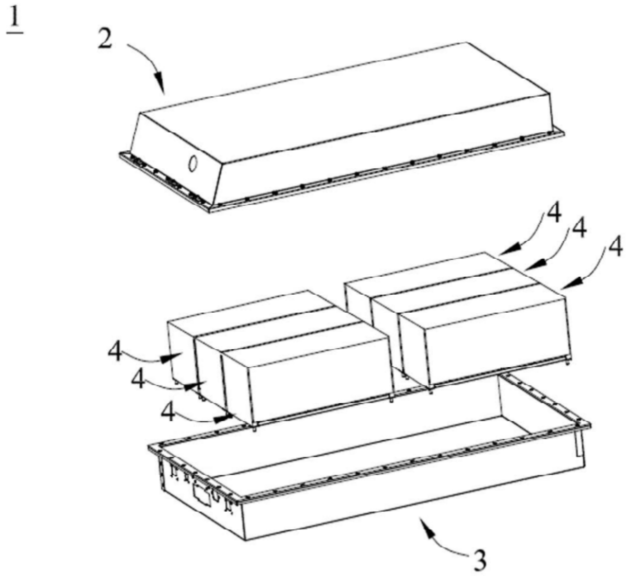


FIG. 5

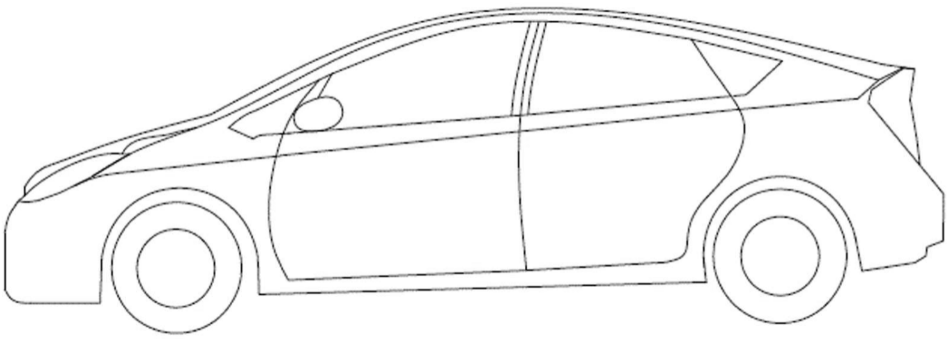

FIG. 6

**INTERNATIONAL SEARCH REPORT**

International application No.
**PCT/CN2023/097179**

**A. CLASSIFICATION OF SUBJECT MATTER**

H01M10/0567(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 电解液, 添加剂, 碳酸乙烯酯, 磺酰亚胺, 磺酸锂, 二氟磷酸锂, cell, battery, electrolyte, additive, EC, lithium bis (fluorosulfonyl) imide, LiFSI, lithium +sulfonate, lithium difluorophosphate

**C. DOCUMENTS CONSIDERED TO BE RELEVANT**

| Category* | Citation of document, with indication, where appropriate, of the relevant passages | Relevant to claim No. |
|---|---|---|
| X | CN 115411363 A (SUNWODA ELECTRIC VEHICLE BATTERY CO., LTD.) 29 November 2022 (2022-11-29)<br>description, paragraphs 28-128 | 1-18 |
| X | CN 110265721 A (CONTEMPORARY AMPEREX TECHNOLOGY CO., LTD.) 20 September 2019 (2019-09-20)<br>description, paragraphs 5-106 | 1-18 |
| X | CN 112909319 A (CONTEMPORARY AMPEREX TECHNOLOGY CO., LTD.) 04 June 2021 (2021-06-04)<br>description, paragraphs 5-126 | 1-18 |
| X | CN 115699388 A (CONTEMPORARY AMPEREX TECHNOLOGY CO., LTD.) 03 February 2023 (2023-02-03)<br>description, paragraphs 6-132 | 1-18 |
| X | CN 115995607 A (HIGHPOWER TECHNOLOGY (HUIZHOU) CO., LTD.) 21 April 2023 (2023-04-21)<br>description, paragraphs 5-70 | 1-18 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **06 December 2023** | **21 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/097179**

**C. DOCUMENTS CONSIDERED TO BE RELEVANT**

| Category* | Citation of document, with indication, where appropriate, of the relevant passages | Relevant to claim No. |
|---|---|---|
| A | CN 115775918 A (SHANSHAN NEW MATERIAL (QUZHOU) CO., LTD.) 10 March 2023 (2023-03-10) entire document | 1-18 |

Form PCT/ISA/210 (second sheet) (July 2022)

**INTERNATIONAL SEARCH REPORT**
**Information on patent family members**

International application No.
**PCT/CN2023/097179**

| Patent document cited in search report | Publication date (day/month/year) | Patent family member(s) | Publication date (day/month/year) |
|---|---|---|---|
| CN 115411363 A | 29 November 2022 | None | |
| CN 110265721 A | 20 September 2019 | US 2021175500 A1 | 10 June 2021 |
| | | WO 2020057398 A1 | 26 March 2020 |
| | | ES 2884131 T3 | 10 December 2021 |
| | | EP 3678251 A1 | 08 July 2020 |
| | | EP 3678251 A4 | 02 December 2020 |
| | | EP 3678251 B1 | 21 July 2021 |
| | | KR 20210040144 A | 12 April 2021 |
| | | KR 102485115 B1 | 04 January 2023 |
| | | PT 3678251 T | 30 August 2021 |
| | | JP 2021536112 A | 23 December 2021 |
| | | JP 7159459 B2 | 24 October 2022 |
| CN 112909319 A | 04 June 2021 | None | |
| CN 115699388 A | 03 February 2023 | None | |
| CN 115995607 A | 21 April 2023 | None | |
| CN 115775918 A | 10 March 2023 | None | |

Form PCT/ISA/210 (patent family annex) (July 2022)